# EUROPÄISCHE PATENTSCHRIFT

(11) **EP 3 152 098 B1**
(45) Veröffentlichungstag und Bekanntmachung des Hinweises auf die Patenterteilung: **26.12.2018**
(21) Anmeldenummer: 15727385.5
(22) Anmeldetag: 03.06.2015
(51) Int. Cl.: G01D 5/14, B62D 15/02

(54) **TRUE POWER ON LENKWINKELSENSOR MIT UMDREHUNGSZÄHLUNG**
TRUE-POWER-ON STEERING ANGLE SENSOR WITH REVOLUTION COUNTER
CAPTEUR D'ANGLE DE BRAQUAGE À MISE SOUS TENSION EFFECTIVE COMPRENANT UN COMPTAGE DE TOURS

(30) Priorität: 03.06.2014 DE 102014210518
(43) Veröffentlichungstag der Anmeldung: 12.04.2017
(73) Patentinhaber: Continental Teves AG & Co. OHG, 60488 Frankfurt am Main (DE)
(72) Erfinder: HABIG, Jens, 61476 Kronberg (DE); HICKL, Frank, 63571 Gelnhausen (DE)
(86) Internationale Anmeldenummer: PCT/EP2015/062363
(87) Internationale Veröffentlichungsnummer: WO 2015/185613

(56) Entgegenhaltungen:
- EP-A2- 1 225 419
- EP-A2- 1 607 720

## Beschreibung

Die Erfindung betrifft einen Lenkwinkelsensor zum Erfassen eines Lenkwinkels.
Aus der Druckschrift DE 10 2004 023 801 A1 ist ein Lenkwinkelsensor bekannt, der einen Lenkwinkel einer Lenkwelle über einen Winkelbereich von größer 360° in einem Fahrzeug erfassen kann.

Ein weiterer Lenkwinkelsensor gemäß des Oberbegriffs des Anspruchs 1 zur Erfassung eines Winkelbereichs von größer 360° ist aus der Druckschrift EP 1 225 419 A2 bekannt.
Auch aus der Druckschrift EP 1 607 720 A2 ist ein Lenkwinkelsensor bekannt, der zur Erfassung eines Winkelbereichs von größer 360° geeignet ist.
Es ist Aufgabe der Erfindung, den bekannten Lenkwinkelsensor zu verbessern.
Die Aufgabe wird durch die Merkmale der unabhängigen Ansprüche gelöst. Bevorzugte Weiterbildungen sind Gegenstand der abhängigen Ansprüche.
Gemäß einem Aspekt der Erfindung umfasst ein Lenkwinkelsensor zum Erfassen eines Lenkwinkels einer Lenkwelle über einen Winkelbereich von größer als 360° in einem Fahrzeug, ein Geberelement zum Erregen eines Geberfeldes und einen Messaufnehmer zum Erregen eines Ausgangssignals in Abhängigkeit eines Empfangs des Geberfeldes, wobei der Messaufnehmer und das Geberelement derart angeordnet sind, dass das vom Messaufnehmer empfangene Geberfeld vom zu erfassenden Drehwinkel der Lenkwelle abhängig ist, und ein Zählelement mit einem nichtflüchtigen Speicher zum Zählen und Ausgeben einer Anzahl von Umdrehungen des Geberfeldes bezüglich eines Referenzdrehwinkels.

Dem angegebenen Lenkwinkelsensor liegt die Überlegung zugrunde, dass der Lenkwinkel zur Erfassung eines Fahrerwunsches verwendet werden könnte. Dieser kann in Fahrzeugkomponenten, wie aktuellen Fahrerassistenzsystemen, wie zum Beispiel dem ESP genannten elektronischen Stabilitätsprogramm oder in EPS genannten Lenkunterstützungen verwendet werden, um daraus eine Sollwertvorgabe abzuleiten. Gerade in letzter Zeit wird dabei die Erfassung des Lenkwinkels über mehrere Umdrehungen der Lenkwelle gefordert, auch wenn die Lenkwinkelsensoren über einen gewissen Zeitraum nicht mit elektrischer Energie versorgt wurden. Derartige Sensoren werden True Power On Sensoren genannt.
Der eingangs genannte Lenkwinkelsensor ist ein derartiger True Power On Sensor und zur Bestimmung einer über mehrere Umdrehungen absoluten Winkelposition mit einem mechanischen Getriebe ausgestattet. Das Getriebe und die daraus resultierende Übersetzung ermöglicht es mehrere Signale mit Hilfe von Sensorelementen zu generieren. Die Periodizität oder die Phasenlage der einzelnen Signale untereinander, also ihrer Beziehung zueinander, ermöglicht dabei die Bestimmung der absoluten Winkelposition über mehrere Umdrehungen der Lenkwelle.
Nachteilig bei diesem Lenkwinkelsensor ist die hohe Anzahl der verwendeten Komponenten, denn es ist für jeden Signalstrang ein auch Maßverkörperung genanntes Geberelement, beispielsweise in Form eines Magneten und ein Messaufnehmer, sowie eine Recheneinheit zur Bestimmung der absoluten Position basierend auf den verschiedenen Signalsträngen notwendig.
Hier greift der angegebene Lenkwinkelsensor mit dem Vorschlag an, die Anzahl der Umdrehungen mit einem Zählelement zu zählen. Auf diese Weise ist zur Bestimmung der absoluten Winkelposition nur ein Signalstrang notwendig. Damit der angegebene Lenkwinkelsensor als True Power On Sensor verwendet werden kann, wird das Ergebnis des Zählelementes in einem nichtflüchtigen Speicher hinterlegt, der auch dann ausgelesen werden kann, wenn der Lenkwinkelsensor über einen Zeitraum nicht mit elektrischer Energie versorgt worden ist.

Erfindungsgemäß ist das Geberfeld ein Magnetfeld. Auf diese Weise können als Messaufnehmer entsprechende magnetische Messaufnehmer, wie auf dem AMR Effekt, dem TMR Effekt oder dem GMR Effekt basierende magnetoresistive Messaufnehmer oder direkt das Magnetfeld erfassende magnetische Messaufnehmer verwendet werden, die kostengünstig, präzise und robust sind.

Erfindungsgemäß umfasst der nichtflüchtige Speicher wenigstens zwei in Reihe miteinander verbundene ummagnetisierbare Speicherelemente, deren Magnetisierung in Abhängigkeit von der Anzahl der Umdrehungen des Geberfeldes durch eine Magnetquelle einstellbar ist. Durch die Serienschaltung der beiden ummagnetisierbaren Speicherelemente kann direkt eine Zählwirkung erreicht werden, weil die Magnetquelle die in Reihe geschaltenen ummagnetisierbaren Speicherelemente nicht alle mit einem Schlag ummagnetisieren kann, sondern bei jeder Vollumdrehung der Lenkwelle immer nur nacheinander. Auf diese Weise kann einem bestimmten Magnetisierungsgrad der einzelnen in Reihe geschaltenen ummagnetisierbaren Speicherelemente eine ganz bestimmte Anzahl an Vollumdrehungen der Lenkwelle eindeutig zugeordnet werden. Dabei werden die Vollumdrehungen in beide Drehrichtungen der Lenkwelle automatisch mit einem entsprechenden Vorzeichen berücksichtigt.
In einer besonderen Weiterbildung des angegebenen Lenkwinkelsensors sind die Speicherelemente spiralförmig angeordnet, wodurch die oben beschriebene Ummagnetisierung der einzelnen in Reihe geschaltenen ummagnetisierbaren Speicherelemente nacheinander am wirkungsvollsten umsetzbar ist.

Erfindungsgemäß umfasst der angegebene Lenkwinkelsensor eine Ausleseeinrichtung zum Auslesen der Magnetisierung der Speicherelemente und zum Ausgeben der Anzahl der Umdrehungen des Geberfeldes in Abhängigkeit der ausgelesenen Magnetisierung der Speicherelemente. Weil die einzelnen in Reihe geschaltenen ummagnetisierbaren Speicherelemente die Gesamtmagnetisierung durch Verstärken oder Auslöschen, je nach Magnetisierungsrichtung beeinflussen, kann einem bestimmten Wertbereich für die Gesamtmagnetisierung eine eindeutige Anzahl an Vollumdrehungen der Lenkwelle zugeordnet werden. Daher könnte die Ausleseeinrichtung beispielsweise eine Kennlinie sein.

Alternativ könnte die Ausleseeinrichtung auch die Magnetisierung der einzelnen Speicherelemente getrennt auslesen und so basierend auf den einzelnen Magnetisierungen einen digitalen Wert für die Anzahl der Vollumdrehungen der Lenkwelle erhalten.

In einer anderen Weiterbildung des angegebenen Lenkwinkelsensors ist das Geberelement eingerichtet, Geberfeld in Axialrichtung der Welle abzugeben. Auf diese Weise können der Messaufnehmer und das Zählelement in Axialrichtung gesehen der Welle gesehen übereinander angeordnet werden, so dass ein einziges Geberfeld genutzt werden kann, um gleichzeitig die Anzahl der Vollumdrehungen der Lenkwelle zu zählen und die Winkelposition der Lenkwelle innerhalb einer Vollumdrehung zu erfassen.

In einer noch anderen Weiterbildung des angegebenen Lenkwinkelsensors umfasst das Geberelement eine erste halbkreisförmige Kreissegmentscheibe zum Abgeben eines ersten Pols des Geberfeldes und eine zweite habkreisförmige Kreissegmentscheibe zum Abgeben eines zweiten Pols des Geberfeldes, deren Segmentschnittbereiche einander zugewandt angeordnet sind. Auf diese Weise kann die Zählung der Vollumdrehungen der Lenkwelle mit der niedrigsten Anzahl an Ummagnetisierungen der oben genannten ummagnetisierbaren Speicherelemente erreicht werden.

In einer bevorzugten Weiterbildung des angegebenen Lenkwinkelsensors ist das Geberelement auf einem koaxial zur Lenkwelle angeordneten Zahnrad angeordnet, das durch eine umfänglich um die Lenkwelle angeordnete Verzahnung angetrieben wird. Auf diese Weise kann das Geberelement axial versetzt zur Lenkwelle positioniert werden, um das Geberfeld in der oben erwähnten Weise in Axialrichtung zu Lenkwelle betrachtet abzugeben.

In einer besonders bevorzugten Weiterbildung umfasst der angegebene Lenkwinkelsensor eine weitere umfänglich um die Lenkwelle angeordnete Verzahnung, wobei axial zwischen den beiden Verzahnungen ein Torsionselement angeordnet ist. Dieses Torsionselement wird dann bei einem Lenkvorgang elastisch verdreht, so dass aus daraus auch das vom Fahrer aufgebrachte Lenkmoment bestimmt werden kann. Auf diese Weise kann die mit dem angegebenen Lenkwinkelsensor erfassbare Information weiter gesteigert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 in einer schematischen Ansicht ein Fahrzeug mit einem Lenksystem,
Fig. 2 in einer schematischen Ansicht das Lenksystem aus Fig. 1,
Fig. 3 in einer schematischen Draufsicht einen Lenkwinkelsensor in dem Lenksystem der Fig. 2,
Fig. 4 in einer perspektiven Ansicht einen Lenkwinkelsensor in dem Lenksystem der Fig. 2,
Fig. 5 in einer schematischen Draufsicht einen Messaufnehmer in dem Lenkwinkelsensor der Fig. 3 und 4, und
Fig. 6 in einer perspektivischen Ansicht einen alternativen Lenkwinkelsensor zeigen.

In den Figuren werden gleiche technische Elemente mit gleichen Bezugszeichen versehen und nur einmal beschrieben.

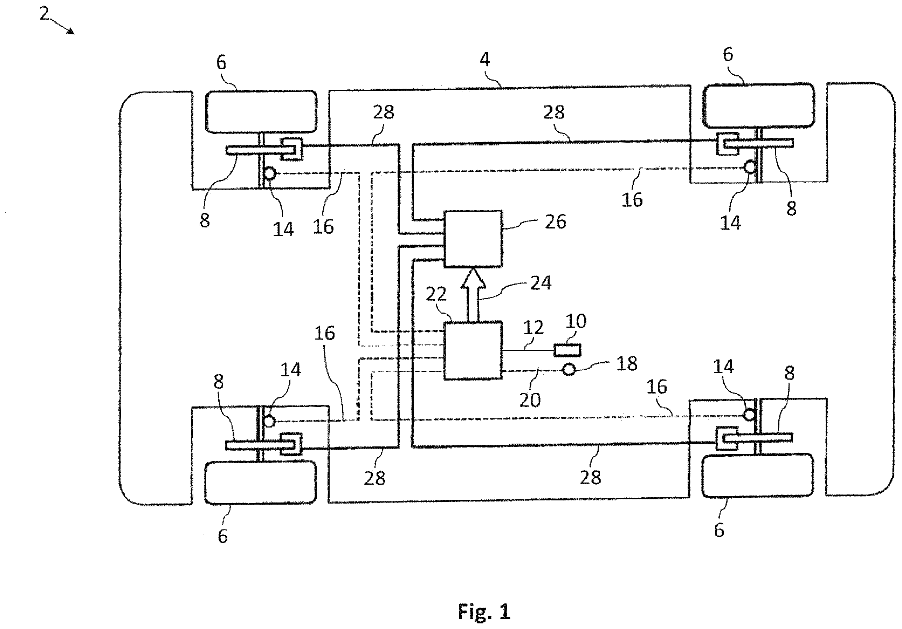

Es wird auf Fig. 1 Bezug genommen, die eine Prinzipdarstellung des Fahrzeuges 2 mit einer in dem Fahrzeug verbauten Fahrdynamikregelung zeigt. Details einer Fahrdynamikregelung können beispielsweise der DE 10 2011 080 789 A1 entnommen werden.

Jedes Rad 6 des Fahrzeuges 2 kann über eine ortsfest am Chassis 4 befestigte Bremse 8 gegenüber dem Chassis 4 verlangsamt werden, um eine Bewegung des Fahrzeuges 2 auf einer nicht weiter dargestellten Straße zu verlangsamen.

Dabei kann es in einer dem Fachmann bekannten Weise passieren, dass das die Räder 6 des Fahrzeugs 2 ihre Bodenhaftung zu einer nicht weiter dargestellten Fahrbahn verlieren und sich das Fahrzeug 2 sogar von einer beispielsweise über ein nicht weiter gezeigtes Lenkrad vorgegebenen Trajektorie durch Untersteuern oder Übersteuern wegbewegt. Diese Trajektorie kann beispielsweise aus einem über einen weiteren Bewegungsaufnahmesensor in Form eines Lenkwinkelsensors 10 erfassten Lenkwinkel 12 vorgegeben werden. Dies wird durch an sich bekannte Regelkreise wie ABS (Antiblockiersystem) und ESP (elektronisches Stabilitätsprogramm) vermieden. In derartigen Regelkreisen werden durch Sensoren Messdaten erfasst. Regler vergleichen die Messdaten dann mit Solldaten und führen die Messdaten mittels Stellgliedern an die Solldaten heran.

In der vorliegenden Ausführung weist das Fahrzeug 2 als Sensoren die Drehzahlsensoren 14 an den Rädern 6 auf, die als Messdaten jeweils ihre Drehzahl 16 der Räder 6 erfassen. Ferner weist das Fahrzeug 2 als Sensor den Inertialsensor 18 auf, der als Messdaten die Fahrdynamidaten 20 des Fahrzeuges 2 erfasst.

Basierend auf den erfassten Drehzahlen 16 und Fahrdynamikdaten 18 kann ein Regler 22 in einer dem Fachmann bekannten Weise bestimmen, ob das Fahrzeug 2 auf der Fahrbahn rutscht oder sogar von der oben genannten vorgegebenen Trajektorie abweicht und entsprechen mit einem an sich bekannten Reglerausgangssignal 24 darauf reagieren. Das Reglerausgangssignal 24 kann dann von einer Stelleinrichtung 26 verwendet werden, um mittels Stellsignalen 28 Stellglieder, wie die Bremsen 8 anzusteuern, die auf das Rutschen und die Abweichung von der vorgegebenen Trajektorie in an sich bekannter Weise reagieren.

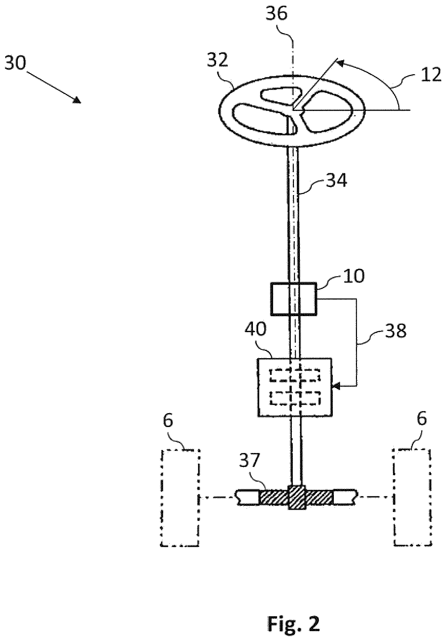

Es wird auf Fig. 2 Bezug genommen, die ein Lenksystem 30 für das Fahrzeug der Fig. 1 zeigt.

Das Lenksystem 30 umfasst ein Lenkrad 32, das auf eine Lenkwelle 34 aufgesetzt ist, die wiederum um eine Rotationsachse 36 drehbar angeordnet ist. Mit dem Lenkrad 32 gibt ein Fahrer des nicht weiter dargestellten Fahrzeuges den zu erfassenden Lenkwinkel 12 vor, mit dem dann die Räder 6 des Fahrzeuges über ein Lenkgetriebe 37 einschlagen sollen. Dazu dreht der Fahrer des Fahrzeuges das Lenkrad 32 mit einer Torsionskraft oder Drehkraft 38 genannt solange, bis die Räder 6 den gewünschten Lenkwinkel 12 erreicht haben. Diese zum Drehen des Lenkrades 32 aufzubringende Drehkraft 38 kann jedoch für einige Fahrer sehr ermüdend sein.

Daher wird die Drehkraft 38 im Rahmen der vorliegenden Ausführung mit dem Lenkwinkelsensor 10 auf die Lenkwelle 34 ausgeübte Drehkraft 38 zusätzlich zum Drehwinkel 12 gemessen und an eine Antriebsvorrichtung 40 in Form eines Antriebsmotors ausgegeben. Die Antriebsvorrichtung 40 dreht die Lenkwelle 34 in die gleiche Richtung wie die Drehkraft 38 und hält so die durch den Fahrer aufzubringende Drehkraft 38 unter einem bestimmten Schwellwert, so dass der Fahrer das Lenkrad 32 mit einem vergleichsweise geringen Kraftaufwand drehen kann.

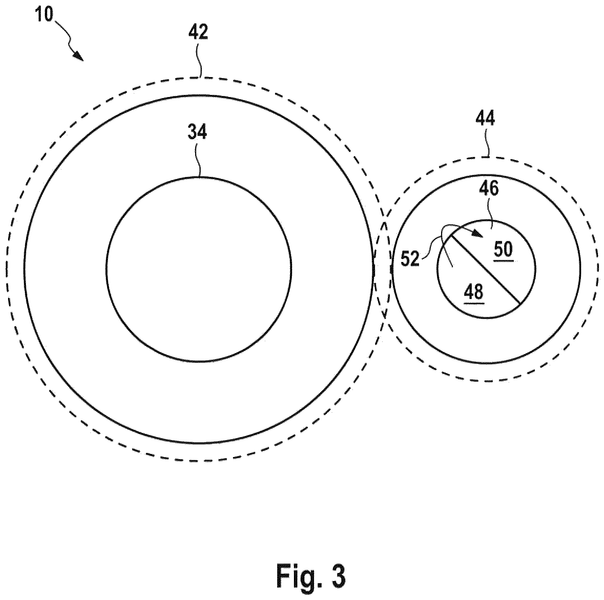

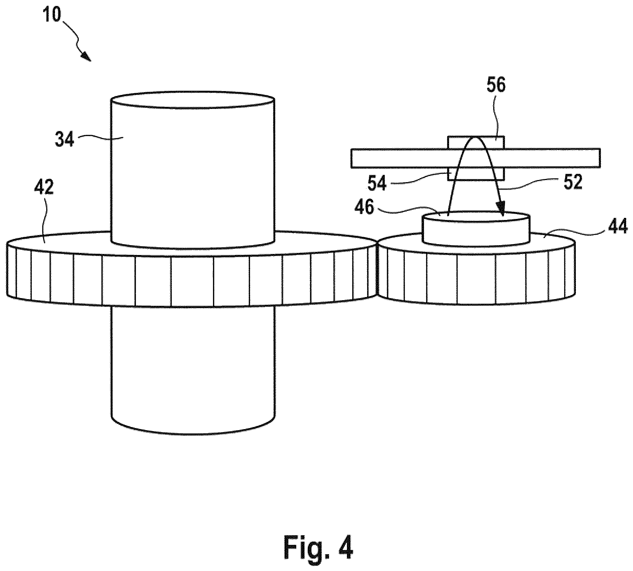

Es wird auf Fig. 3 und 4 Bezug genommen, die in einer schematischen Ansicht den Lenkwinkelsensor 10 ohne eine Erfassungsmöglichkeit der Drehkraft 38 zeigen.

Der Lenkwinkelsensor 10 umfasst ein auf die Lenkwelle 34 drehfest aufgesetztes erstes Zahnrad 42, das ineinander eingreifend mit einem zweiten Zahnrad 44 gekoppelt ist. Auf diesem zweiten Zahnrad 44 ist ein Geberelement 46 in Form eines Gebermagneten angeordnet, der aus einem halbkreissegmentförmigen Magnetnordpol 48 und einem halbkreissegmentförmigen Magnetsüdpol 50 gebildet ist, die in Axialrichtung der Lenkwelle 34 ein magnetisches Geberfeld 52 erregen. Das Gebermagnetfeld 52 dreht sich so bei der Drehung der Lenkwelle 34 mit dem Lenkwinkel 12 gegenüber dem Chassis 4 des Fahrzeuges 2 mit dieser mit, so dass der Lenkwinkel 12 über das Gebermagnetfeld 52 erfasst werden kann.

Das Gebermagnetfeld 52 durchdringt einen ortsfest zum Chassis 4 angeordneten magnetoresistiven Messaufnehmer 54, der eingerichtet ist, das sich gegenüber dem Chassis 4 mit der Lenkwelle 34 drehbare Gebermagnetfeld 52 zu erfassen. Dabei hängt die Stärke des vom magnetoresistiven Messaufnehmer 54 erfassten Gebermagnetfeldes 52 von der Drehwinkellage des Gebermagnetfeld 52 gegenüber dem Chassis 4 und damit vom zu erfassenden Lenkwinkel 12 ab. Entsprechend kann mit dem magnetoresistiven Messaufnehmer 54 ein nicht weiter dargestelltes und vom Lenkwinkel 12 abhängiges Messsignal erzeugt werden, dass dann beispielsweise an den Regler 22 wie in Fig. 1 gezeigt, ausgegeben werden kann.

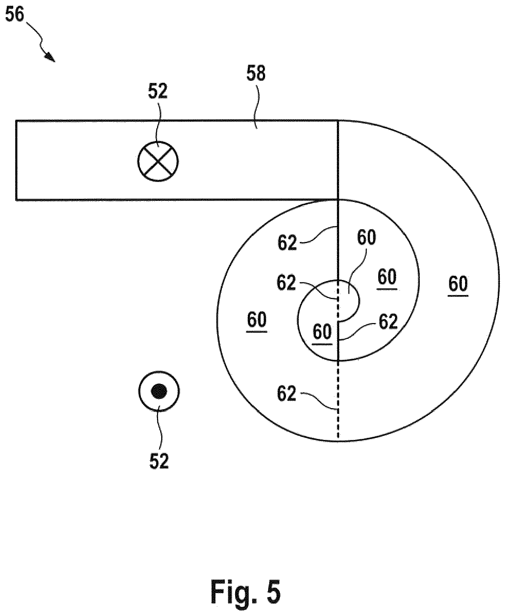

Neben dem magnetoresistiven Messaufnehmer 54 umfasst der Lenkwinkelsensor 10 ferner ein Zählelement 56. Dieses Zählelement 56 soll die Anzahl der Drehungen der Lenkwelle 34 erfassen und wird nachstehend anhand von Fig. 5 näher verdeutlicht.

Das Zählelement 56 umfasst einen Domänengenerator 58, der vom magnetischen Geberfeld 56 durchdrungen wird. An diesen Domänengenerator 58 schließt sich eine Reihenschaltung ummagnetisierbarer Speicherelemente 60. Die ummagnetisierbaren Speicherelemente 60 sind aus einem magnetisierbaren Material hergestellt, das ohne ein äußeres Magnetfeld in über Bloch-Wände getrennte weisssche Bezirke unterteilt ist, die sich in ihrem Magnetfeld in der Summe gegeneinander aufheben. Der Domänenwandgenerator 58 legt basierend auf dem Gebermagnetfeld 52 an die ummagnetisierbaren Speicherelemente 60 ein äußeres Magnetfeld an, das die einzelnen weissschen Bezirke des an den Domänengenerator 58 angrenzenden ummagnetisierbaren Speicherelementes 60 bis zu einer Domänenwand 62 am Ende dieses ummagnetisierbaren Speicherelementes 60 in einer von dem Gebermagnetfeld 52 abhängigen Vorzugsrichtung ausrichtet. Dreht sich das Gebermagnetfeld 52 um 180°, so wird am Ende des sich daran anschließenden nächsten ummagnetisierbaren Speicherelementes 62 eine weitere Domänenwand 62 erzeugt, im Rahmen derer die weissschen Bezirke in diesem ummagnetisierbaren Speicherelement 62 ebenfalls ausgerichtet werden. Dieser Prozess wiederholt sich bei jeder Drehung des Gebermagnetfeldes 52 um 180°, wodurch das gesamte Zählelement 56 wie ein Schieberegister wirkt. Ändert sich jedoch die Richtung des Gebermagnetfeldes 52, so werden zunächst die Domänenwände 62 in absteigender Reihenfolge nacheinander wieder zerstört und damit das Schieberegister gelöscht, bis, nachdem alle Domänenwände 62 gelöscht sind, neue Domänenwände aufgebaut werden können.

Um die Anzahl der Drehungen der Lenkwelle 34 zu bestimmen braucht damit lediglich die Gesamtmagnetisierung der einzelnen ummagnetisierbaren Speicherelemente 62 ausgelesen werden. Dies kann in beliebiger Weise erfolgen, wie beispielsweise durch Bestimmen des magnetischen Gesamtwiderstandes der Reihenschaltung der ummagnetisierbaren Speicherelemente 60.

Ist die Anzahl der Drehungen der Lenkwelle 34 in der zuvor beschriebenen Weise bestimmt, kann gemeinsam mit dem oben genannten vom Lenkwinkel 12 abhängigen Messsignal der Lenkwinkel 12 in einem Bereich von über 360° angegebene werden.

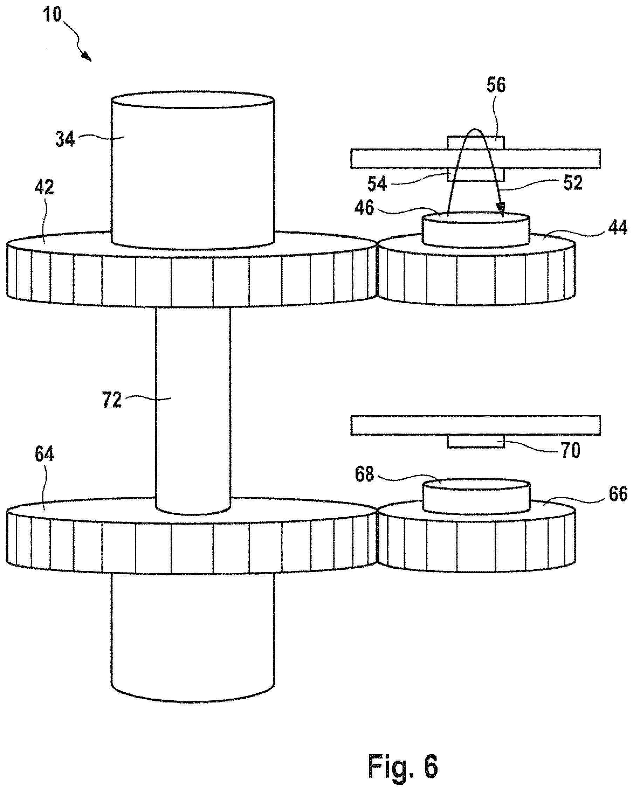

Der Lenkwinkelsensor 10 kann, wie in Fig.6 gezeigt, um ein zum ersten Zahnrad 42 axial beanbstandetes weiteres erstes Zahnrad 64 erweitert werden, das in ein zum zweiten Zahnrad 44 axial beabstandetes weiteres zweites Zahnrad 66 eingreift, so dass das weitere zweite Zahnrad 66 bei der Drehung der Lenkwelle 34 gedreht wird. Auf dem weiteren zweiten Zahnrad 66 ist ein analog zum Geberelement 54 aufgebautes weiteres Geberelement 68 aufgesetzt, dessen nicht weiter gezeigtes Geberfeld von einem weiteren Messaufnehmer 70 erfasst wird. Auf diese Weise kann der Lenkwinkel 12 der Lenkwelle 34 an zwei verschiedenen axial beabstandeten Positionen der Lenkwelle 34 erfasst werden. Zwischen diesen beiden axial beabstandeten Positionen ist ein Torsionselement 72 angeordnet, dass bei der Drehung der Lenkwelle 34 tordiert wird. Aufgrund dieses Torsionselementes 72 entsteht zwischen diesen beiden axial beabstandeten Positionen eine Winkeldifferenz, die von der Lenkkraft des Fahrers zur Drehung der Lenkwelle 34 abhängig ist, so dass diese Lenkkraft basierend auf der Winkeldifferenz und den Torsionseigenschaften der Lenkwelle 34 bestimmt werden kann.

## Patentansprüche

1. Lenkwinkelsensor (10) zum Erfassen eines Lenkwinkels (12) einer Lenkwelle (34) über einen Winkelbereich von größer als 360° in einem Fahrzeug (2), umfassend
- ein Geberelement (46) zum Erregen eines Geberfeldes (52), wobei das Geberfeld (52) ein Magnetfeld ist, und einen Messaufnehmer (54) zum Erregen eines Ausgangssignals in Abhängigkeit eines Empfangs des Geberfeldes (52), wobei der Messaufnehmer (54) und das Geberelement (54) derart angeordnet sind, dass das vom Messaufnehmer (54) empfangene Geberfeld (52) vom zu erfassenden Drehwinkel (12) der Lenkwelle (34) abhängig ist, und
- ein Zählelement (56) mit einem nichtflüchtigen Speicher zum Zählen und Ausgeben einer Anzahl von Umdrehungen des Geberfeldes (52) bezüglich eines Referenzdrehwinkels, wobei der nichtflüchtige Speicher wenigstens zwei in Reihe miteinander verbundene ummagnetisierbare Speicherelemente (60) umfasst, deren Magnetisierung in Abhängigkeit von der Anzahl der Umdrehungen des Geberfeldes (52) durch eine Magnetquelle (58) einstellbar ist, **dadurch gekennzeichnet, dass** der Lenkwinkelsensor
- eine Ausleseeinrichtung zum Auslesen der Magnetisierung der Speicherelemente (60) und zum Ausgeben der Anzahl der Umdrehungen des Geberfeldes (52) in Abhängigkeit der ausgelesenen Magnetisierung der Speicherelemente (60) umfasst.

2. Lenkwinkelsensor (10) nach Anspruch 1, wobei die Speicherelemente (60) spiralförmig angeordnet sind.

3. Lenkwinkelsensor (10) nach einem der vorstehenden Ansprüche, wobei das Geberelement (46) eingerichtet ist, das Geberfeld (52) in Axialrichtung der Welle (34) abzugeben.

4. Lenkwinkelsensor (10) nach einem der vorstehenden Ansprüche, wobei der Messaufnehmer (54) und das Zählelement (56) in Axialrichtung gesehen übereinander angeordnet sind.

5. Lenkwinkelsensor (10) nach einem der vorstehenden Ansprüche, wobei das Geberelement (46) eine erste halbkreisförmige Kreissegmentscheibe (48) zum Erregen eines ersten Pols des Geberfeldes (52) und eine zweite habkreisförmige Kreissegmentscheibe (50) zum Erregen eines zweiten Pols des Geberfeldes (52) umfasst, deren Segmentschnittbereiche einander zugewandt angeordnet sind.

6. Lenkwinkelsensor (10) nach einem der vorstehenden Ansprüche, wobei das Geberelement (46) auf einem koaxial zur Lenkwelle (34) angeordneten Zahnrad (44) angeordnet ist, das durch eine umfänglich um die Lenkwelle (34) angeordnete Verzahnung (42) angetrieben wird.

7. Lenkwinkelsensor (10) nach Anspruch 6, umfassend eine weitere umfänglich um die Lenkwelle (34) angeordnete Verzahnung (64), wobei axial zwischen den beiden Verzahnungen (42, 64) ein Torsionselement (72) angeordnet ist.

## Claims

1. Steering angle sensor (10) for detecting a steering angle (12) of a steering column (34) over a range of angles greater than 360° in a vehicle (2), comprising
- a transmitter element (46) for stimulating a transmitter field (52), wherein the transmitter field (52) is a magnetic field, and a measuring sensor (54) for stimulating an output signal depending on reception of the transmitter field (52), wherein the measuring sensor (54) and the transmitter element (54) are disposed so that the transmitter field (52) received by the measuring sensor (54) is dependent on the angle of rotation (12) of the steering column (34) that is to be detected, and
- a counting element (56) with a non-volatile memory for counting and outputting a number of revolutions of the transmitter field (52) relative to a reference angle of rotation, wherein the non-volatile memory comprises at least two magnetizable memory elements (60) that are connected together in series, the magnetization of which can be adjusted by a magnetic source (58) depending on the number of revolutions of the transmitter field (52), **characterized in that** the steering angle sensor
- comprises a readout device for reading out the magnetization of the memory elements (60) and for outputting the number of revolutions of the transmitter field (52) depending on the magnetization of the memory elements (60) that has been read out.

2. Steering angle sensor (10) according to Claim 1, wherein the memory elements (60) are disposed in a spiral manner.

3. Steering angle sensor (10) according to either one of the preceding claims, wherein the transmitter element (46) is configured to output the transmitter field (52) in the axial direction of the column (34).

4. Steering angle sensor (10) according to any one of the preceding claims, wherein the measuring sensor (54) and the counting element (56) are disposed one above the other when viewed in the axial direction.

5. Steering angle sensor (10) according to any one of the preceding claims, wherein the transmitter element (46) comprises a first semicircular circle segment disk (48) for stimulating a first pole of the transmitter field (52) and a second semicircular circle segment disk (50) for stimulating a second pole of the transmitter field (52), the segment section regions of which are disposed facing each other.

6. Steering angle sensor (10) according to any one of the preceding claims, wherein the transmitter element (46) is disposed on a gear wheel (44) that is coaxial to the steering column (34) and that is driven by toothing (42) disposed peripherally about the steering column (34).

7. Steering angle sensor (10) according to Claim 6, comprising further toothing (64) disposed peripherally about the steering column (34), wherein a torsion element (72) is disposed axially between the two toothings (42, 64) .

## Revendications

1. Capteur d'angle de braquage (10) destiné à détecter un angle de braquage (12) d'un arbre de direction (34) sur une plage angulaire supérieure à 360° dans un véhicule (2), comprenant
- un élément émetteur (46) destiné à exciter un champ émetteur (52), le champ émetteur (52) étant un champ magnétique et un capteur de mesure (54) destiné à exciter un signal de sortie en fonction d'une réception du champ émetteur (52), le capteur de mesure (54) et l'élément émetteur (54) étant disposés de telle sorte que le champ émetteur (52), reçu par le capteur de mesure (54), dépend de l'angle de rotation (12) à détecter de l'arbre de direction (34), et
- un élément de comptage (56), pourvu d'une mémoire non volatile, destiné à compter et délivrer un nombre de rotation du champ émetteur (52) par rapport à un angle de rotation de référence, la mémoire non volatile comprenant au moins deux éléments de mémoire re-magnétisables (60) connectés en série dont la magnétisation peut être réglée par une source magnétique (58) en fonction du nombre de rotation du champ émetteur (52), **caractérisé en ce que** le capteur d'angle de braquage comporte
- un dispositif de lecture destiné à lire la magnétisation des éléments de mémoire (60) et à délivrer le nombre de rotation du champ émetteur (52) en fonction de la magnétisation lue des éléments de mémoire (60).

2. Capteur d'angle de braquage (10) selon la revendication 1, dans lequel les éléments de mémoire (60) sont disposés en spirale.

3. Capteur d'angle de braquage (10) selon l'une des revendications précédentes, dans lequel l'élément émetteur (46) est conçu pour émettre le champ émetteur (52) dans la direction axiale de l'arbre (34).

4. Capteur d'angle de braquage (10) selon l'une des revendications précédentes, dans lequel le capteur de mesure (54) et l'élément de comptage (56) sont disposés l'un au-dessus l'autre dans la direction axiale.

5. Capteur d'angle de braquage (10) selon l'une des revendications précédentes, dans lequel l'élément émetteur (46) comprend un premier disque en segment de cercle semi-circulaire (48) destiné à exciter un premier pôle du champ émetteur (52) et un deuxième disque en segment circulaire semi-circulaire (50) destiné à exciter un deuxième pôle du champ émetteur (52) dont des régions de coupe de segment sont disposées en regard les unes des autres.

6. Capteur d'angle de braquage (10) selon l'une des revendications précédentes, dans lequel l'élément émetteur (46) est disposé sur une roue dentée (44) qui est disposée coaxialement à l'arbre de direction (34) et qui est entraînée par une denture (42) disposée circonférentiellement autour de l'arbre de direction (34) .

7. Capteur d'angle de direction (10) selon la revendication 6, comprenant une autre denture (64) disposée circonférentiellement autour de l'arbre de direction (34), un élément de torsion (72) étant disposé axialement entre les deux dentures (42, 64).
